# EUROPÄISCHE PATENTANMELDUNG

(11) **EP 0 847 698 A1**
(43) Veröffentlichungstag der Anmeldung: **17.06.1998**
(21) Anmeldenummer: 97101839.5
(22) Anmeldetag: 06.02.1997
(51) Int. Cl.: A23F 3/30, A23F 3/32, A23F 3/34

(54) **Zubereitungsfertig verpacktes Instant-Teeprodukt und Verfahren zu seiner Herstellung**

(30) Priorität: 12.12.1996 DE 29621553 U
(71) Anmelder: KRÜGER GmbH & CO. KG, D-51469 Bergisch-Gladbach (DE)
(72) Erfinder: Die Erfindernennung liegt noch nicht vor
(74) Vertreter: Eggert, Hans-Gunther, Dr.

(57) **Zusammenfassung**

Es wird ein Instantprodukt auf der Basis von Tee-, Frucht- oder Kräutergetränken beschrieben, das zubereitungsfertig in Portionsbeuteln verpackt vorliegt. Die einzelnen Portionsbeutel können gegebenenfalls zu Sammelpackungen oder Großverbraucherpackungen zusammengefaßt werden.
Das Instantprodukt enthält 50 bis 9 Gew.-% eines Trägerstoffes aus der Gruppe von Maltodextrin, Gelatine oder pulvrigem Eiweiss.

## Beschreibung

Die vorliegende Erfindung betrifft ein Instant-Teeprodukt auf der Basis von Tee-, Frucht- oder Kräutergetränken sowie seine Verwendung, insbesondere zur Herstellung eines Instant-Teegetränkes.

Instant-Teegetränke in Tassen- oder Glasportionen werden üblicherweise durch aufwendige Handhabung von Aufgußbeuteln hergestellt mit den allgemein bekannten Nachteilen.

Bei der vorliegenden Erfindung wird der Instant-Tee in Portionsbeuteln mit Flüssigkeit aufgelöst. Ohne Ziehenlassen ist das Produkt in Sekunden fertig. Die unangenehme Entsorgung des Aufgußbeutels ist nicht mehr erforderlich.

Der vorliegenden Erfindung liegt die Aufgabe zugrunde, ein Instant-Teeprodukt, insbesondere eine Instant-Getränkemischung, bereitzustellen, die zubereitungsfertig in Portionsbeuteln verpackt vorliegt. Unter 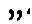 zubereitungsfertig" versteht man, daß das Instant-Teeprodukt bereits fertig dosiert, z.B. tassengerecht bemessen, vorliegt, so daß es zur Herstellung des Instant-Getränks vom Verbraucher nicht mehr dosiert oder abgemessen werden muß.

Die Aufgabe wird erfindungsgemäß durch ein Instant-Teeprodukt auf der Basis von Tee-, Frucht- oder Kräuter-Teegetränken gelöst, das zubereitungsfertig in Portionsbeuteln, z.B. für Tassen- oder Glasportionen, verpackt vorliegt. Die einzelnen Portionsbeutel werden jeweils zu Sammelpackungen oder Großverbraucherpackungen zusammengefaßt.

Das erfindungsgemäß zubereitungsfertig verpackte Instant-Teeprodukt ist dadurch erhältlich, daß man Frucht- und/oder Kräuterdrogen zu Flüssigextrakten extrahiert, die so erhaltenen Flüssigextrakte durch Sprühtrocknung oder Gefriertrocknung in Pulverform überführt und diese Pulverextrakte anschließend mit mindestens einem Trägerstoff und mindestens einem weiteren Rezepturbestandteil mischt und granuliert oder agglomeriert.

Das Instant-Teeprodukt kann beispielsweise dadurch erhalten werden, daß man die pulverförmigen Komponenten zusammenstellt. Jedoch ist es ebenso möglich, die flüssigen Komponenten vor der Sprühtrocknung oder der Gefriertrocknung zusammenzustellen.

Die erfindungsgemäß eingesetzten Trägerstoffen bestehen aus Maltodextrin, Gelatine oder pulvrigem Eiweiß.

Der Trägerstoff wird in Mengen von 50 bis 99 %, vorzugsweise von 80 bis 95 % und insbesondere von 90 bis 95 %, eingesetzt, bezogen auf das Instant-Endprodukt.

Fruchtextrakte sind beispielsweise die von Orange, Himbeer oder Erdbeer. Geeignete Tee-Extrakte sind beispielsweise die von Hibiskus, Schwarztee, grünem Tee oder Mate-Tee. Geeignete Instant-Rezepturbestandteile auf Basis von Kräutern sind beispielsweise die von Fenchel, Kamille, Pfefferminz oder der sogenannten 20 Kräutermischung.

Diese Rezepturbestandteile werden in Mengen von 1 bis 50 %, vorzugsweise von 5 bis 20 % und insbesondere von 5 bis 10 %, eingesetzt, bezogen auf das Instant-Teeprodukt.

Unter Gewürzen versteht man insbesondere Salz, Zimt, Curry, Basilikum, Vanille, Nelke, Muskat und Kardamom.

Das fertige Instant-Teeprodukt kann als Pulver, Granulat oder Agglomerat vorliegen.

Das Instant-Teeprodukt kann beispielsweise ein ungesüßter Instant-Tee sein. Da das Instant-Teeprodukt zubereitungsfertig in Portionsbeuteln vorliegt, läßt sich durch Auflösen in kochendem, heißen oder kalten Wasser rasch ein Instant-Getränk zubereiten.

Die zubereitungsfertige Verpackung des Instant-Teeproduktes auf der Basis von Tee-, Frucht- oder Kräutergetränken in Portionsbeuteln gemäß der vorliegenden Erfindung hat den Vorteil, daß das Produkt von, Verbraucher für seine Verwendung nicht mehr dosiert werden braucht. Vor allen, ist die Zubereitung einzelner Tassen oder Gläser des Instant-Getränkes möglich, ohne daß wie bei den auf den Markt vertriebenen Großpackungen eine angebrochene Verpackung entstände. Die nach der Erfindung in der Sammel- oder Großverbraucherpackung verbleibenden Portionsbeutel bleiben von Luftfeuchtigkeit und Luftsauerstoff unbeeinträchtigt und können weiter gelagert werden.

Die zubereitungsfertige Verpackung des Instant-Teeproduktes in Portionsbeuteln gemäß der Erfindung hat somit einen hohen Convenience-Wert.

### Beispiel

Zusammensetzung eines Instantbeuteltees:
Aus
- 30 % Maltodextrin und anderen Kohlehydraten
- 30 % Gelatine
- 2 % Pflanzenextrakten
- 2 % Kräuterextrakten
- 2 % Schwarztee-Extrakten
- 2 % Fruchtpulvern
- 0,5 % etherischen Ölen
- 0,5 % Vitaminen
- 0,5 % Mineralstoffen
- 1 % Aromen
- 1 % Gewürzen
- 3,5 % Kakaopulvern
- 20 % Eiweißen
- 5 % Genußsäuren
erhält man durch Sprühtrocknen oder Gefriertrocknen und Mischen, Granulieren und einen Instant-Tee der anschließend zubereitungsfertig, d.h. tassen- oder bechergerecht, in Portionsbeutel verpackt werden kann. Die einzelnen Portionsbeutel können anschließend zu Sammelpackungen oder Großverbraucherpackungen zusammengefaßt sein.

## Patentansprüche

1. Instant-Teeprodukt auf der Basis von Frucht-, Kräuter- oder Teegetränken, das 50 bis 99 Gew.-% eines Trägerstoffes aus der Gruppe von Maltodextrin, Gelatine oder pulvrigem Eiweiß enthält und das zubereitungsfertig in Portionsbeuteln verpackt vorliegt.

2. Instant-Teeprodukt nach Anspruch 1, dadurch gekennzeichnet, daß der Trägerstoff in Mengen von 80 bis 95 %, vorzugsweise 90 bis 95 %, vorliegt.

3. Instant-Teeprodukt nach Anspruch 1 oder 2, dadurch gekennzeichnet, daß der Instant-Rezepturbestandteil in Mengen von 1 bis 50 Gew.-%, vorzugsweise 5 bis 20 Gew.-%, vorliegt.

4. Instant-Teeprodukt nach einem der Ansprüche 1 bis 3, erhältlich durch Zusammenstellung der pulverförmigen Komponenten.

5. Instant-Teeprodukt nach einen, der Ansprüche 1 bis 3, erhältlich durch Zusammenstellung der flüssigen Komponenten direkt über der Sprühtrocknung oder Gefriertrocknung.

6. Instant-Teeprodukt nach einem der Ansprüche 1 bis 5, wobei der Rezepturbestandteil ein Pflanzenextrakt, ein Kräuterextrakt, ein Fruchtpulver, ein etherisches Öl, ein Vitamin, ein Mineralstoff, ein Gewürz, ein Kakaopulver, ein Eiweiß, eine Genußsäure, ein natürlicher, naturidentischer oder synthetischer Aromastoff oder eine Riechstoffverbindung ist, die gleichzeitig Geschmacksstoff ist.

7. Instant-Teeprodukt nach einem der Ansprüche 1 bis 6, wobei die einzelnen Portionsbeutel zu Sammelpackungen oder Großverbraucherpackungen zusammengefaßt sind.

8. Instant-Teeprodukt nach einen, der Ansprüche 1 bis 7, erhältlich durch
a) Extraktion von Frucht- oder Kräuterdrogen zu Flüssigextrakten;
b) Überführung der Flüssigextrakte in die Pulverform durch Sprühtrocknung oder Gefriertrocknung;
c) Mischen und Granulieren oder Agglomerieren der Pulverextrakte zusammen mit mindestens einem Trägerstoff und mindestens einem weiteren Rezepturbestandteil.

9. Instant-Teeprodukt nach einem der Ansprüche 1 bis 8, wobei es als Pulver, Granulat oder Agglomerat vorliegt.

10. Instant-Teeprodukt nach einen, der Ansprüche 1 bis 9, wobei das Instant-produkt ein ungesüßter Instant-Tee ist.

11. Instant-Teegetränk, zubereitbar durch Auflösen eines Instantproduktes nach einem der Ansprüche 1 bis 10 in kochendem, heißen oder kalten Wasser.

12. Verfahren zur Herstellung eines zubereitungsfertig verpackten Instant-Teeprodukts, dadurch gekennzeichnet, daß man Frucht- und/oder Kräuterdrogen zu Flüssigextrakten extrahiert, die so erhaltenen Flüssigextrakte durch Sprühtrocknung oder Gefriertrocknung in Pulverform überführt und diese Pulverextrakte anschließend mit mindestens einem Trägerstoff und mindestens einem weiteren Rezepturbestandteil mischt und granuliert oder agglomeriert.
